# EUROPÄISCHE PATENTSCHRIFT

(11) **EP 0 471 155 B1**
(45) Veröffentlichungstag und Bekanntmachung des Hinweises auf die Patenterteilung: **27.07.1994**
(21) Anmeldenummer: 91108995.1
(22) Anmeldetag: 01.06.1991
(51) Int. Cl.: A01C 7/12

(54) **Dosiervorrichtung für eine Verteilmaschine, vorzugsweise eine Sämaschine oder einen Düngerstreuer**
Dosing apparatus for a distributor, e.g. a seed drill or fertiliser spreader
Dispositif de dosage pour un distributeur, p.ex. un semoir ou un épandeur d'engrais

(30) Priorität: 09.08.1990 DE 9011580 U
(43) Veröffentlichungstag der Anmeldung: 19.02.1992
(73) Patentinhaber: Rabewerk GmbH + Co., 49152 Bad Essen (DE)
(72) Erfinder: Gehrke, Rudolf, Dipl.-Ing., W-2990 Aschendorf (DE); Gerdom, Friedrich, Dipl.-Ing., W-4515 Bad Essen 1 (DE); Schwarz, Ulrich, Dipl.-Ing., W-4515 Bad Essen 2 (DE)
(74) Vertreter: Missling, Arne, Dipl.-Ing.

(56) Entgegenhaltungen:
- EP-A- 0 210 515
- EP-A- 0 358 878

## Beschreibung

Die Erfindung bezieht sich auf eine Dosiervorrichtung für eine Verteilmaschine, vorzugsweise eine Sämaschine oder einen Düngerstreuer, mit zumindest jeweils einem Grob- oder Normaldosierrad und einem Feindosierrad, welche drehbar in einem Gehäuse gelagert, mittels einer Dosierwelle wahlweise antreibbar und mit zumindest einem von einer Ausrückvorrichtung betätigbaren Sperrelement wahlweise in oder außer Eingriff bringbar sind.

Eine derartige Dosiervorrichtung ist im wesentlichen aus der EP-A2-358 878 bekannt.

Bei Sämaschinen oder Düngerverteilmaschinen ist es erforderlich, das jeweilige Gut so zu dosieren, daß aus dem jeweiligen Verteilrohr eine exakte, vorbestimmbare Menge an Fördergut pro Fahrtstrecke der Vertellmaschine abgegeben wird. Es muß somit möglich sein, eine vorgegebene Menge an Fördergut gleichmäßig auf eine bestimmte Fläche auszubringen.

Um einem landwirtschaftlichen Betrieb eine möglichst universell einsetzbare Verteilmaschine zur Verfügung stellen zu können, ist es erforderlich, diese den jeweiligen Arbeitsbedingungen, nämlich den unterschiedlichen je Flächeneinheit auszubringenden Mengen und insbesondere den Korngrößen des zu verteilenden Gutes anzupassen. Beispielsweise unterscheiden sich verschiedene Getreidearten erheblich hinsichtlich der Korngröße, ebenso verhält es sich bei Düngermaterialien.

Aus dem Stand der Technik ist es bekannt, bei einer derartigen Verteilmaschine Dosierräder unterschiedlicher Förderkapazität vorzusehen, beispielsweise ein Grob- oder Normaldosierrad und ein Feindosierrad. Es ist auch möglich, jeweils mehrere dieser Räder zu verwenden. Daraus ergibt sich, daß die Verteilmaschine so aufgebaut sein muß, daß jeweils entweder nur das Feindosierrad oder das Normaldosierrad in Betrieb ist, während das andere Dosierrad gesperrt bzw. außer Funktion gesetzt ist. Die Umschaltung zwischen den einzelnen Dosierrädern erfolgt beispielsweise, wie in der EP-A2-358 878 beschrieben, durch Verschieben der Dosierwelle, welche mit entsprechenden Kupplungselementen ausgerüstet ist. Um eine Drehung des jeweils nicht benötigten Dosierrades zu vermeiden, ist in dieser Druckschrift vorgeschlagen, im Bereich des Umfangs der Dosierräder jeweils ein Federelement anzubringen, welches in die einzelnen Kammern des Dosierrades eingreift und dieses somit sperrt. Diese Vorgehensweise hat sich bei metallischen Dosierrädern bewährt, bei aus Kunststoff bestehenden Dosierrädern ergibt sich jedoch das Problem, daß das Federelement möglicherweise das Dosierrad beschädigt, da sich das Federelement bei drehendem Dosierrad ständig mit diesem in Eingriff befindet und somit von einer Kammerwandung zur nächsten springt.

Die Offenlegungsschriften 35 25 091, 35 27 759 und 36 05 768 zeigen jeweils Sävorrichtungen mit einem kombinierten Normal- und Feinsärad. Bei diesen Sävorrichtungen erfolgt die Sperrung des jeweils nicht benutzten Särades oder Dosierrades nur teilweise, da sich das Feindosierrad stets in Antriebsverbindung mit der Dosierwelle befindet und somit stets gedreht wird; in der DE-OS 35 25 091 ist dazu eine Ausrückvorrichtung vorgesehen. Demgegenüber ist es möglich, das Normaldosierrad durch Verschieben eines Stiftes oder eines Verriegelungselementes gegenüber dem Gehäuse festzulegen bzw. zu verriegeln. Der zu diesem Zwecke vorgesehene Bolzen ist soweit verschiebbar, daß er in eine Bohrung der Gehäusewand eingreift und somit das Normaldosierrad sperrt. Dabei erweist es sich als besonders nachteilig, daß vor einer Verschiebung des Bolzens das Dosierrad erst in die entsprechende, mit der Ausnehmung des Gehäuses fluchtende Stellung gebracht werden muß. Dies ist sehr umständlich, insbesondere bei Maschinen, bei welchen pro Säschar ein Säradpaar vorgesehen ist. Die Bedienungsperson muß somit die einzelnen Säräder nacheinander in die entsprechende fluchtende Stellung drehen und durch Verschieben des Bolzens verriegeln. Hierzu sind nicht nur besondere Fingerfertigkeiten erforderlich, vielmehr werden auch spezielle Werkzeuge benötigt, um ein Verschieben der relativ kleinen Bolzen in den sehr beengten Raumverhältnissen zu ermöglichen.

Der Erfindung liegt die Aufgabe zugrunde, eine Dosiervorrichtung der eingangs genannten Art zu schaffen, welche bei einfachem Aufbau und hoher Lebensdauer eine betriebssichere und leicht zu betätigende Sperrung des jeweils nicht benötigten Dosierrades ermöglicht.

Erfindungsgemäß wird die Aufgabe dadurch gelöst, daß das Sperrelement an dem Gehäuse gelagert und durch die Ausrückvorrichtung in Abhängigkeit von einer Umschaltung der Dosierwelle von einem Eingriffsmodus mit dem Normaldosierrad zu dem Feindosierrad in bzw. außer Eingriff mit dem jeweiligen Dosierrad bringbar ist. Die erfindungsgemäße Dosiervorrichtung zeichnet sich durch eine Reihe besonderer Vorteile aus. Erfindungsgemäß wird zum einen ein starres Sperrelement verwendet, welches eine sichere Halterung bzw. Verriegelung des Dosierrades sicherstellt, da es in eine der Kammern des Dosierrades eingreifen kann. Da weiterhin das starre Sperrelement mittels des elastischen Elementes in Eingriff mit einem der Dosierräder vorgespannt ist oder, wie erfindungsgemäß ebenfalls vorgesehen, in eine außer Eingriff befindliche Stellung gespannt ist, ist stets eine eindeutige Lage des Sperrelementes gegeben, so daß sich dieses entweder in oder außer Eingriff befindet. Zwischenstellungen, welche zu einer Beschädigung des Dosierrades führen könnten, werden vermieden. Ein weiterer, wesentlicher Vorteil der vorliegenden Erfindung besteht darin, daß eine zusätzliche Ausrückvorrichtung vorgesehen ist, um das Sperrelement von dem Dosierrad zu lösen oder mit diesem in Eingriff zu bringen. Mittels dieser Ausrückvorrichtung kann somit jederzeit in jeder beliebigen Stellung der Säräder eine Betätigung der Dosiervorrichtung bzw. eine Umschaltung erfolgen, wobei die Bedienungsperson nicht, wie beim Stand der Technik üblich, umständlichste Handgriffe vornehmen muß. Da weiterhin eine klare Zuordnung des Sperrelementes zu dem Dosierrad gegeben ist, kann wirkungsvoll vermieden werden, daß einige der Dosierräder gesperrt und andere weiterhin in Betrieb befindlich sind. Die Funktionssicherheit der gesamten Anlage wird somit wesentlich erhöht, was insbesondere beim Ausbringen von Dünger u.ä. von besonderer Wichtigkeit ist. Die Ausrückvorrichtung ist betrieblich mit der Umschaltung der Dosierwelle verbunden, so daß die jeweilige Blockierung des nicht benötigten Särades automatisch beim Umschalten von einem Särad bzw. Dosierrad auf das andere erfolgen kann. Durch diese Betriebs-Koppelung sind Fehlbedienungen vollständig zu vermeiden, ein weiterer Vorteil liegt darin, daß die Bedienungsperson lediglich die Umschaltung von einem Dosierrad auf das andere vornehmen muß, so daß weitere Handgriffe nicht erforderlich sind. Insbesondere bei ungeübten Bedienungspersonen ist dies ein wichtiger Vorteil, da diese lediglich die Umschaltung vom Feindosierrad auf das Normaldosierrad bzw. umgekehrt vornehmen müssen.

In einer besonders günstigen Ausgestaltung der Erfindung ist vorgesehen, daß die Ausrückvorrichtung handbetätigbar ist. Dabei kann die Ausrückvorrichtung einen federvorgespannten, über Totpunkt schwenkbaren Hebel umfassen, an dessen Endbereich das Sperrelement gelagert ist. Der Hebel kann somit durch einfache Bedienungsschritte umgelegt werden, es sind keine zusätzlichen Werkzeuge o.ä. erforderlich.

Weiterhin kann die Ausrückvorrichtung einen federvorgespannten Hebel umfassen, an dessen Endbereich das Sperrelement ausgebildet ist.

In einer Weiterbildung ist vorgesehen, daß die Dosierwelle mit zumindest einem Anschlag zur Betätigung des Hebels versehen ist, so daß die Verschiebung der Dosierwelle eine exakte Zwangsbewegung des Hebels mit sich bringt. Dabei kann der Anschlag der Verschiebung der Dosierwelle so gegen den Hebel in Anlage bringbar sein, daß die Kraft der Federvorspannung, welche den Hebel in der jeweiligen Ausgangslage erhält, überwunden wird, so daß der Hebel entweder in sperrenden Eingriff mit dem Dosierrad gebracht oder von diesem gelöst wird.

In einer anderen, ebenfalls sehr günstigen Ausgestaltungsform der Erfindung ist vorgesehen, daß parallel zur Dosierwelle eine mit dieser verbundene Hilfswelle in dem Gehäuse gelagert ist, welche mit dem Hebel in Eingriff bzw. mit diesem verbunden ist. Die Verwendung einer Hilfswelle bringt mehrere Vorteile, diese kann zum einen eine betriebssichere, besonders einfache Lagerung des Hebels sicherstellen, zum anderen ist es möglich, die Hilfswelle in Abhängigkeit von einer Bewegung der Dosierwelle beim Umschalten von einem Dosierrad auf das andere zu bewegen, beispielsweise zu verschieben oder zu drehen. Ein weiterer Vorteil dieser Ausgestaltungsform liegt darin, daß bei Verwendung mehrerer Dosierräder die einzelnen Hebel synchron zueinander bewegbar sind. Bei einer Verschiebung der Hilfswelle zusammen mit der Dosierwelle ist es günstig, wenn auf der Hilfswelle ein Konus angebracht ist, der unter den jeweiligen Hebel einschiebbar ist, um diesen zu verschwenken.

Erfindungsgemäß ist es auch möglich, die Hilfswelle bei Verschiebung der Dosierwelle über einen Drehmechanismus zu drehen, um auf diese Weise den Hebel, welcher drehfest mit der Hilfswelle verbunden ist, zu bewegen. Der Drehmechanismus kann entweder durch einen Anschlag oder einen Konus, welcher auf der Dosierwelle befestigt ist, hervorgerufen werden, es ist auch möglich, zwischen dem Hebel und der Hilfswelle ein Getriebe anzubringen, beispielsweise ein Kegelradgetriebe.

Da erfindungsgemäß erreicht werden soll, daß das eine Dosierrad freigegeben ist, während das andere Dosierrad gesperrt ist, ist erfindungsgemäß in einer weiteren Ausgestaltungsform vorgesehen, daß für jedes der Dosierräder ein separates Sperrelement und ein separater Hebel verwendet werden. Um eine synchrone Umschaltung der Hebel, d.h. ein Lösen des einen Sperrelementes und ein Ineingriffbringen des anderen Sperrelementes sicherzustellen, können die beiden Hebel miteinander in einer Wirkverbindung stehen. Dabei kann vorgesehen sein, die beiden Hebel mittels einer ersten Feder gegeneinander vorzuspannen, während einer der Hebel mittels einer zweiten Feder gegen die Wirkung der ersten Feder vorgespannt ist. Die Federwirkungen heben sich somit teilweise auf und führen zu einem Gleichgewichtszustand zwischen den Hebeln, so daß durch eine Betätigung bzw. Verschwenkung eines der Hebel der jeweils andere Hebel synchron hierzu mitbewegt wird, ohne daß jedoch eine starre Koppelung der Hebel vorgesehen ist, welche wiederum einen entsprechenden sperrenden Eingriff, beispielsweise bei ungünstiger Stellung oder bei geringfügigen Maßabweichungen des Dosierrades, verhindern würde.

Im folgenden wird die Erfindung anhand eines Ausführungsbeispieles in Verbindung mit der Zeichnung beschrieben. Dabei zeigt:
- Fig. 1: eine schematische Querschnittsansicht eines Ausführungsbeispieles eines Saatkastens mit einer Dosiereinrichtung,
- Fig. 2: eine Längsschnittansicht durch die in Fig. 1 gezeigte Anordnung,
- Fig. 3: eine Seiten-Schnittansicht eines ersten Ausführungsbeispieles der erfindungsgemäßen Dosiervorrichtung,
- Fig. 4: eine Draufsicht, im Schnitt, auf die in Fig. 3 gezeigte Anordnung,
- Fig. 5: eine Seiten-Schnittansicht eines weiteren Ausführungsbeispieles der erfindungsgemäßen Dosiervorrichtung,
- Fig. 6: eine Teil-Draufsicht, teils im Schnitt, auf die in Fig. 5 gezeigte Anordnung,
- Fig. 7: eine Draufsicht auf den Getriebebereich der in Fig. 5 gezeigten Anordnung, als Alternativausführung zu Fig. 6,
- Fig. 8: eine Seitenansicht, teils im Schnitt, eines weiteren Ausführungsbeispieles der erfindungsgemäßen Dosiervorrichtung,
- Fig. 9: ein weiteres Ausführungsbeispiel der Dosiervorrichtung in einer Ansicht ähnlich Fig. 8.

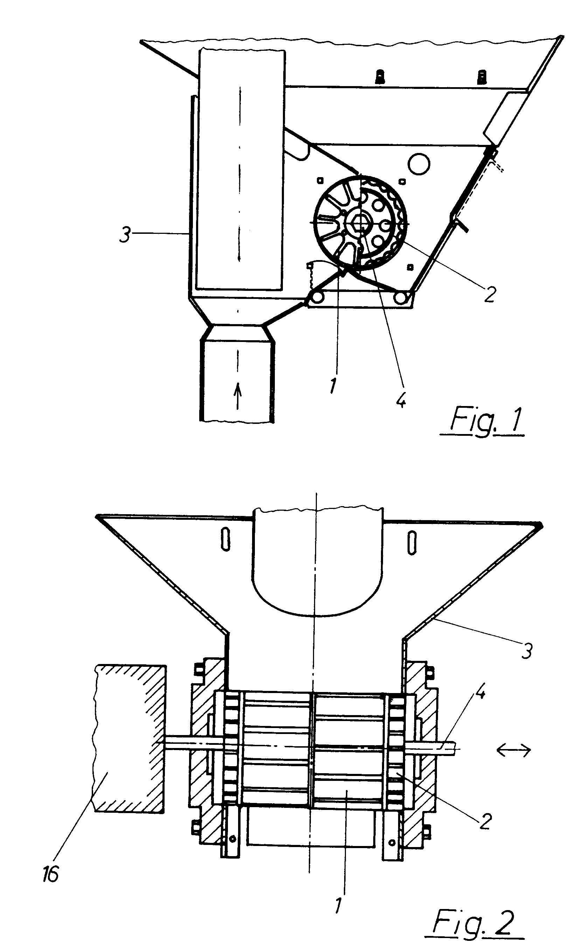

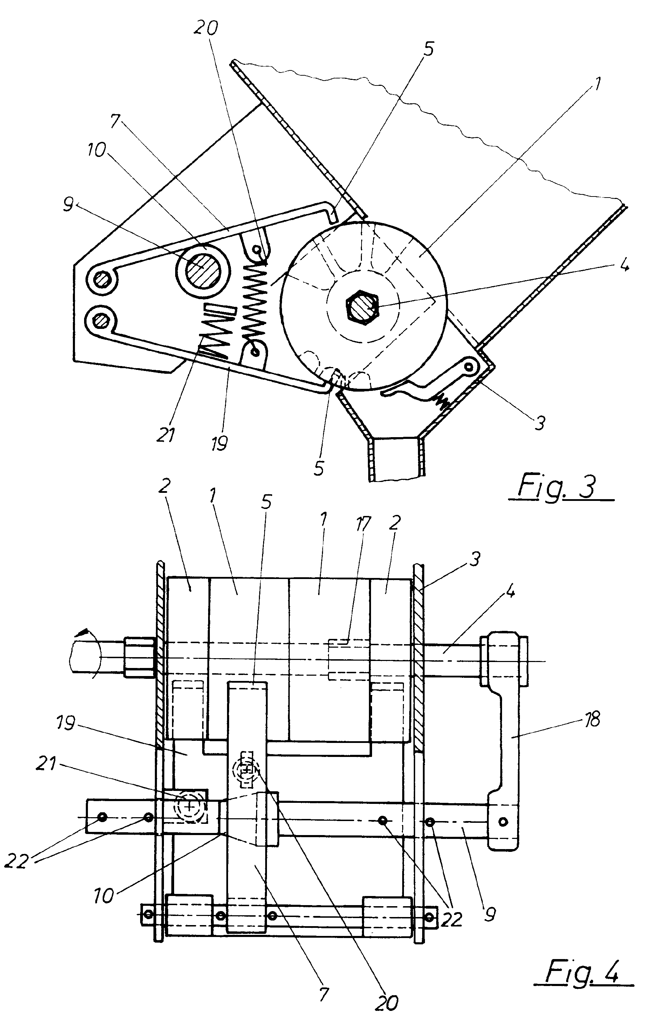

Die Fig. 1 und 2 zeigen jeweils ein Gehäuse 3, in welchem auf einer Dosierwelle 4 zumindest ein Normaldosierrad 1 und ein Feindosierrad 2 gelagert sind. Die Dosierwelle 4 ist mittels eines Antriebsgetriebes 16 drehbar, so daß das oberhalb der Dosierräder in einem trichterförmigen Bereich des Gehäuses 3 befindliche zu verteilende Gut durch die einzelnen Kammern der Dosierräder gefördert wird. Durch eine entsprechende Verschiebung der Dosierwelle 4, so wie dies in Fig. 2 durch den Doppelpfeil angedeutet ist, sind nicht dargestellte Kupplungen ein- bzw. ausrückbar, um wahlweise eines oder mehrere der Dosierräder mit der Dosierwelle zu verbinden bzw. von dieser auszukuppeln. Dieser Mechanismus ist, wie weitere Details der Anordnung, im einzelnen in der EP-A2-358 878 beschrieben, auf welche hiermit Bezug genommen wird, so daß sich die Beschreibung weiterer Einzelheiten erübrigt.

Die Fig. 3 und 4 zeigen ein erstes Ausführungsbeispiel der erfindungsgemäßen Dosiervorrichtung. Bei dieser sind in dem Gehäuse nebeneinander insgesamt zwei Normaldosierräder 1 und zwei Feindosierräder 2 gelagert, so wie dies in Fig. 4 gezeigt ist. In dem gezeigten Betriebszustand ist die Dosierwelle 4 nach links verschoben, so daß sich ein Schaltprofil 17 (Sechskant) in Eingriff mit den beiden miteinander gekoppelten Normalsärädern 1 befindet, während die beiden Feindosierräder 2 nicht von der Dosierwelle 4 angetrieben werden. Die Dosierwelle 4 ist mit einem Handgriff 18 verbunden, in dem sie drehbar ist. Der Handgriff 18 wiederum steht in fester Verbindung mit einer Hilfswelle 9, welche verschiebbar in dem Gehäuse 3 gelagert ist. An der Hilfswelle 9 ist ein Konus 10 ausgebildet, welcher bei einer Längsverschiebung der Hilfswelle 9, welche zusammen mit der Dosierwelle 4 verschoben wird, so unter einen Hebel 7 bringbar bzw. von diesem lösbar ist, daß der Hebel 7 verschwenkt. Das an dem Ende des Hebels 7 angebrachte starre Sperrelement 5 wird somit von dem Normaldosierrad 1 gelöst. Um gleichzeitig die beiden Feindosierräder zu sperren, ist ein zweiter Hebel 19 ebenfalls schwenkbar am Gehäuse 3 gelagert, welcher mit dem Hebel 7 über eine Zugfeder 20 verbunden ist. Gleichzeitig wirkt auf den zweiten Hebel 19 eine Druckfeder 21, welche den zweiten Hebel 19 in Richtung einer von dem Feindosierrad 2 gelöste Stellung vorspannt. Die beiden Federn 20 und 21 wirken somit gegeneinander. Wenn der Konus 10 sich nicht in Eingriff mit dem Hebel 7 befindet, drückt die Druckfeder 21 den Hebel 19 nach unten (Fig. 3), so daß dieser von dem Feindosierrad 2 gelöst ist, während gleichzeitig durch die Kraft der Zugfeder 20 der obere Hebel 7 in sperrenden Eingriff mit dem Normaldosierrad 1 gebracht wird. Bei einem Anheben des oberen Hebels 7 mittels des Konus 10 wird eine Kraft aufgebracht, welche größer ist, als die Kraft der Druckfeder 21, so daß das obere Sperrelement 5 von dem Normaldosierrad 1 gelöst wird, während der untere Hebel 19 verschwenkt und mit dem Feindosierrad 2 in Eingriff gebracht wird. Somit erfolgt in Abhängigkeit von einer Umschaltung der Dosierwelle 4 gleichzeitig zwangsweise eine entsprechende Betätigung der Sperrelemente 5. Die Hilfswelle 9 ist mit Verrastungs-Einrichtungen 22 versehen, um diese in der jeweiligen Betriebsposition zu halten. Hierzu können beispielsweise Steckbolzen verwendet werden, welche in entsprechende Ausnehmungen der Hilfswelle 9 eingebracht sind, es ist auch möglich, federvorgespannte Kugeln o.ä. vorzusehen.

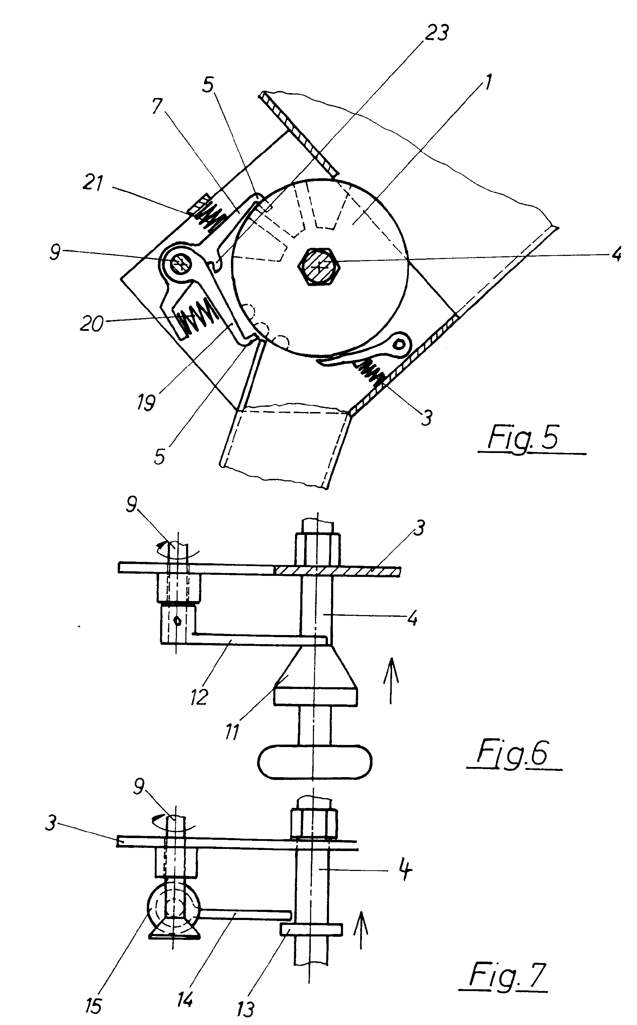

In den Fig. 5 und 6 ist ein weiteres Ausführungsbeispiel dargestellt, bei welchem die beiden Hebel 7 und 19 ebenfalls durch Federn 20,21 miteinander betriebsverbunden sind, so daß sich eine Anordnung ergibt, deren Aufbau und Wirkungsweise der in den Fig. 3 und 4 gezeigten Hebelanordnung entspricht. Auf eine detaillierte Beschreibung kann deshalb an dieser Stelle verzichtet werden. Die Ausgestaltungsform der Fig. 5 und 6 unterscheidet sich darin, daß die Hilfswelle 9 nicht verschoben, sondern gedreht wird. Zu diesem Zwecke ist an dem freien Ende der Hilfswelle 9 ein drehfest mit dieser verbundener Hebel 12 gelagert, welcher bei einer Verschiebung der Dosierwelle 4 an einem Konus 11 der Dosierwelle 4 geführt und damit verschwenkt wird. Durch die Verschwenkung der Hilfswelle 9 aus der in den Figuren 5 und 6 dargestellten Position heraus wird der drehfest mit dieser verbundene Hebel 19 verschwenkt, so daß dieser außer Eingriff gebracht werden kann, während gleichzeitig das Sperrelement 5 des Hebels 19 in eine Kammer des entsprechenden Dosierrades 2 eingeführt wird. Der Hebel 7 ist mit einer Anlage 23 versehen, welche sich gegen den Hebel 19 abstützen kann. Der in das Feinsärad 2 eingreifende Hebel 19 ist somit mit der Hilfswelle 9 betriebsverbunden, so daß eine Verschwenkung des Hebels 12 den Hebel 19 außer Eingriff bringt, wenn die Dosierwelle 4 nach unten (Fig. 6) verschoben wird. Bei einem Ineingriffbringen des Hebels 19 sichert die Feder 20 ein Einrasten des Sperrelementes 5 dieses Hebels.

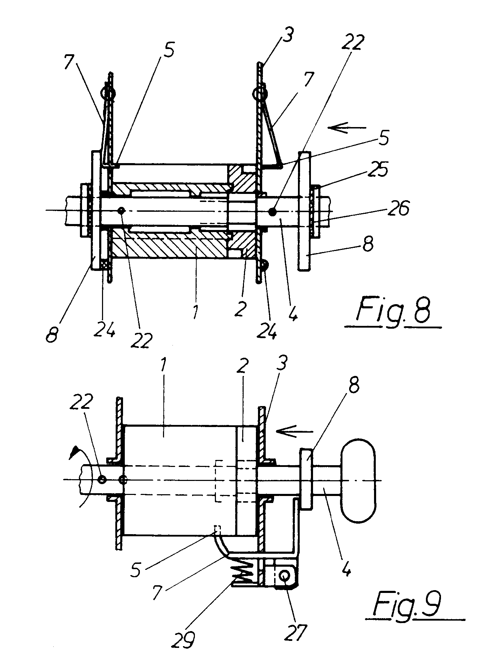

Die Fig. 7 zeigt ein Ausführungsbeispiel, welches sich von dem Ausführungsbeispiel der Fig. 6 durch die Betätigung der Hilfswelle 9 unterscheidet. Diese ist über ein Kegelradgetriebe 15 mit einem Schwenkhebel 14 gekoppelt, welcher um eine in Fig. 8 vertikale Achse verschwenkbar ist. Zur Betätigung des Schwenkhebels 14 weist die Dosierwelle 4 einen Anschlag 13 auf, so daß bei einer Verschiebung der Dosierwelle 4 nach oben der Hebel 14 verschwenkt und damit die Hilfswelle 9 gedreht wird. Bei einem Zurückziehen der Dosierwelle 4 erfolgt die Rückstellung des Getriebes 15 bzw. des Schwenkhebels 14 durch die Kraft der Feder 21.

Die Fig. 8 zeigt ein Ausführungsbeispiel, bei welchem der Hebel 7 in Form einer Blattfeder ausgebildet ist, an deren Ende sich jeweils das Sperrelement 5 befindet. Auf der Verschiebewelle 4 sind beidseitig jeweils scheibenförmige Anschläge 8 ausgebildet, welche nicht drehfest auf der Dosierwelle 4 gelagert sind. Die jeweilige Anschlag-Platte 8 stützt sich gegen eine Auflage 24 ab, wenn sie bei Verschiebung der Dosierwelle 4 an das Gehäuse 3 angenähert ist. Zwischen dem Anschlag 8 und einem ringförmigen Bund, welcher an der Dosierwelle 4 ausgebildet ist, ist jeweils ein Gleitlager 26 vorgesehen, um günstige Reibungsverhältnisse zwischen dem stillstehenden Anschlag 8 und der sich drehenden Dosierwelle 4 zu gewährleisten. Die Dosierwelle 4 weist weiterhin Verrastungen 22 auf, beispielsweise in Form von vorgespannten Kugeln, um die jeweilige Verschiebeposition der Dosierwelle 4 zu sichern. Aus Fig. 8 ergibt sich, daß bei einer seitlichen Verschiebung der Dosierwelle 4 jeweils durch Einwirkung des Anschlages 8 eines der Sperrelemente 5 in sperrenden Eingriff mit dem jeweiligen Dosierrad gebracht wird, während das andere Sperrelement 5 durch die Federkraft des Hebels 7 außer Eingriff ist.

Die Fig. 9 zeigt ein weiteres Ausführungsbeispiel, bei welchem der Hebel 7 an einer Achse 27 schwenkbar an dem Gehäuse 3 gelagert ist und mittels einer Feder 29 in eine in Eingriff befindliche Stellung vorgespannt ist. An der Dosierwelle 4 ist ein Anschlag 8 ausgebildet, so daß bei einer Längsverschiebung der Dosierwelle 4 der Hebel 7 verschwenkt und das Sperrelement 5 von dem Normaldosierrad 1 gelöst wird.

Die Fig. 8 und 9 zeigen jeweils die Verwendung nur eines Feindosierrades und eines Normaldosierrades, es ist natürlich auch möglich, jeweils mehrere Dosierräder auf der Dosierwelle 4 zu lagern, deren Zellen beispielsweise gegeneinander versetzt werden können. Weiterhin ergibt sich, daß in entsprechender Weise für jedes der Dosierräder ein separater Hebelmechanismus vorgesehen sein kann, auf dessen Darstellung zur Vereinfachung in Fig. 9 verzichtet wurde.

Die Erfindung ist sowohl bei pneumatischen Sämaschinen als auch bei mechanischen Sämaschinen anwendbar. Es ergeben sich insbesondere dann günstige Gesamtkonstruktionen, wenn, wie bei mechanischen Sämaschinen, jedem einzelnen Saatrohr ein Dosier- oder Säradpaar zugeordnet ist. Im übrigen sind die Ausführungsbeispiele in den Figuren so gezeigt, daß sich die Dosierräder in der Seitenansicht jeweils im Uhrzeigersinn drehen, diese Drehung wird durch Sperren oder Freiläufe sichergestellt.

Die Erfindung ist nicht auf die gezeigten Ausführungsbeispiele beschränkt, vielmehr ergeben sich für den Fachmann im Rahmen der Ansprüche vielfältige Abwandlungs- und Modifikationsmöglichkeiten.

## Patentansprüche

1. Dosiervorrichtung für eine Verteilmaschine, vorzugsweise eine Sämaschine oder einen Düngerstreuer, mit zumindest jeweils einem Grob- oder Normaldosierrad (1) und einem Feindosierrad (2), welche drehbar in einem Gehäuse (3) gelagert, mittels einer Dosiervalle (4) wahlweise antreibbar und mit zumindest einem von einer Ausrückvorrichtung (8, 9, 10, 11, 12, 13, 14) betätigbaren Sperrelement (5) wahlweise in oder außer Eingriff bringbar sind,
dadurch gekennzeichnet, daß
das Sperrelement (5) an dem Gehäuse (3) gelagert und durch die Ausrückvorrichtung in Abhängigkeit von einer Umschaltung der Dosierwelle (4) von einem Eingriffsmodus mit dem Normaldosierrad (1) zu dem Feindosierrad (2) in bzw. außer Eingriff mit dem jeweiligen Dosierrad (1,2) bringbar ist.

2. Vorrichtung nach Anspruch 1, dadurch gekennzeichnet, daß das Sperrelement (5) mittels eines elastischen Elements vorgespannt ist.

3. Vorrichtung nach Anspruch 1 oder 2, dadurch gekennzeichnet, daß die Ausrückvorrichtung handbetätigbar ist.

4. Vorrichtung nach Anspruch 3, dadurch gekennzeichnet, daß die Ausrückvorrichtung einen federvorgespannten, schwenkbaren Hebel (6) umfaßt, an dessen Endbereich das Sperrelement (5) ausgebildet ist.

5. Vorrichtung nach Anspruch 1, dadurch gekennzeichnet, daß die Dosierwelle (4) längsverschiebbar an dem Gehäuse (3) gelagert ist.

6. Vorrichtung nach Anspruch 5, dadurch gekennzeichnet, daß die Dosierwelle (4) mit zumindest einem Anschlag (8) zur Betätigung eines Hebels (7) versehen ist (Fig. 9).

7. Vorrichtung nach Anspruch 6, dadurch gekennzeichnet, daß der Anschlag (8) bei Verschiebung der Dosierwelle (4) gegen die Kraft der Federvorspannung gegen den Hebel (7) zu dessen Verschwenkung in sperrenden Eingriff in Anlage bringbar ist.

8. Vorrichtung nach Anspruch 7, dadurch gekennzeichnet, daß der Anschlag (8) bei Verschiebung der Dosierwelle (4) gegen die Kraft der Federvorspannung gegen den Hebel (7) zu dessen Verschwenkung in lösenden Eingriff in Anlage bringbar ist.

9. Vorrichtung nach Anspruch 5, dadurch gekennzeichnet, daß parallel zur Dosierwelle (4) eine mit dieser verbundene Hilfswelle (9) in dem Gehäuse (3) gelagert ist, welche mit dem Hebel (7) in Eingriff ist.

10. Vorrichtung nach Anspruch 9, dadurch gekennzeichnet, daß die Hilfswelle (9) zur Verschwenkung des Hebels (7) mit einem in Anlage an den Hebel (7) bringbaren Konus (10) versehen ist.

11. Vorrichtung nach Anspruch 9, dadurch gekennzeichnet, daß die Hilfswelle (9) bei Verschiebung der Dosierwelle (4) über einen Drehmechanismus drehbar ist und daß der Hebel (7) über die Hilfswelle (9) betätigbar ist.

12. Vorrichtung nach Anspruch 11, dadurch gekennzeichnet, daß der Hebel (7) drehbar an der Hilfswelle (9) gelagert ist.

13. Vorrichtung nach Anspruch 11 oder 12, dadurch gekennzeichnet, daß der Drehmechanismus einen auf der Dosierwelle (4) ausgebildeten Konus (11) und einen an der Hilfswelle (9) befestigten Hebel (12) umfaßt (Fig. 5 und 6).

14. Vorrichtung nach Anspruch 11, dadurch gekennzeichnet, daß der Drehmechanismus einen auf der Dosierwelle (4) ausgebildeten Anschlag (13) und einen mit dem Anschlag (13) in Anlage bringbaren Schwenkhebel (14) umfaßt, welcher über ein Getriebe (15) mit der Hilfswelle (9) verbunden ist (Fig. 7).

15. Vorrichtung nach einem der Ansprüche 9 bis 14, dadurch gekennzeichnet, daß an dem Gehäuse (3) zwei Hebel gelagert sind, welche jeweils mit einem der Dosierräder (1,2) in Eingriff bringbar sind, wobei die beiden Hebel mittels einer ersten Feder gegeneinander vorgespannt sind und daß einer der Hebel mittels einer zweiten Feder gegen die Wirkung der ersten Feder vorgespannt ist.

16. Vorrichtung nach einem der Ansprüche 1 bis 15, dadurch gekennzeichnet, daß die Dosierwelle (4) und/oder das Gehäuse (3) mit einer lösbaren Sicherung zur Sicherung der jeweiligen Stellung der Dosierwelle (4) versehen sind.

## Claims

1. Dosing apparatus for a distributor, preferably a sowing machine or a fertiliser spreader, having at least one coarse or normal dosing wheel (1) and one fine dosing wheel (2) which are rotatably mounted in a housing (3), can optionally be driven by means of a dosing shaft (4) and can optionally be engaged with or disengaged from at least one locking element (5) actuatable by a tripping device (8, 9, 10, 11, 12, 13, 14), characterised in that the locking element (5) is mounted on the housing (3) and can be engaged with or disengaged from the respective dosing wheel (1, 2) by the tripping device as a function of the change-over of the dosing shaft (4) from an engagement mode with the normal dosing wheel (1) to the fine dosing wheel (2).

2. Apparatus according to claim 1, characterised in that the locking element (5) is prestressed by means of a resilient element.

3. Apparatus according to claim 1 or 2, characterised in that the tripping device can be manually actuated.

4. Apparatus according to claim 3, characterised in that the tripping device comprises a spring-loaded, tiltable lever (7), on the end region of which the locking element (5) is formed.

5. Apparatus according to claim 1, characterised in that the dosing shaft (4) is mounted so as to be longitudinally displaceable on the housing (3).

6. Apparatus according to claim 5, characterised in that the dosing shaft (4) is provided with at least one stop (8) for operating a lever (7) (Fig. 9).

7. Apparatus according to claim 6, characterised in that, when the dosing shaft (4) is displaced against the force of the spring tension, the stop (8) can be brought to rest against the lever (7) for tilting the latter into the engagement position.

8. Apparatus according to claim 7, characterised in that, when the dosing shaft (4) is displaced against the force of the spring tension, the stop (8) can be brought to rest against the lever (7) for tilting the latter into the disengagement position.

9. Apparatus according to claim 5, characterised in that an auxiliary shaft (9) parallel to the dosing shaft (4) and connected thereto is mounted in the housing (3) and engages with the lever (7).

10. Apparatus according to claim 9, characterised in that the auxiliary shaft (9) is provided with a cone (10) which can be brought to rest against the lever (7) in order to tilt the latter.

11. Apparatus according to claim 9, characterised in that the auxiliary shaft (9) is rotatable via a rotating mechanism when the dosing shaft (4) is displaced, and in that the lever (7) can be operated via the auxiliary shaft (9).

12. Apparatus according to claim 11, characterised in that the lever (7) is rotatably mounted on the auxiliary shaft (9).

13. Apparatus according to claim 11 or 12, characterised in that the rotating mechanism comprises a cone (11) formed on the dosing shaft (4) and a lever (12) fixed to the auxiliary shaft (9) (Figs. 5 and 6).

14. Apparatus according to claim 11, characterised in that the rotating mechanism comprises a stop (13) formed on the dosing shaft (4) and a rocking lever (14) which can be brought to rest against the stop (13) and which is connected to the auxiliary shaft (9) via a transmission (15) (Fig. 7).

15. Apparatus according to any one of claims 9 to 14, characterised in that two levers are mounted on the housing (3) and can each be brought into engagement with one of the dosing wheels (1, 2), the two levers being pretensioned against each other by means of a first spring, and in that one of the levers is pretensioned against the effect of the first spring by means of a second spring.

16. Apparatus according to any one of claims 1 to 15, characterised in that the dosing shaft (4) and/or the housing (3) are provided with a releasable securing device for securing the respective position of the dosing shaft (4).

## Revendications

1. Dispositif de dosage pour un distributeur, notamment pour un semoir ou un épandeur d'engrais, comportant au moins une roue (1) de dosage grossier ou normal et une roue (2) de dosage fin, lesdites roues, supportées en rotation dans un carter (3), pouvant être l'une ou l'autre au choix, entraînées au moyen d'un arbre doseur (4) et pouvant être l'une ou l'autre au choix venues en engagement avec au moins un élément de blocage (5) qui peut être actionné par un dispositif de débrayage (8, 9, 10, 11, 12, 13, 14), ou être libérées de cet élément,
caractérisé en ce que,
l'élément de blocage (5) est monté sur le carter (3) et peut être engagé avec la roue (1, 2) considérée ou dégagé de celle-ci, par l'intermédiaire du dispositif de débrayage en fonction d'un passage de l'arbre de dosage (4) d'un état d'engagement avec la roue (1) de dosage normal à un état d'engagement avec la roue (2) de dosage fin.

2. Dispositif selon la revendication 1, caractérisé en ce que l'élément de blocage (5) est précontraint au moyen d'un élément élastique.

3. Dispositif selon l'une quelconque des revendications 1 ou 2, caractérisé en ce que le dispositif de débrayage peut être actionné à la main.

4. Dispositif selon la revendication 3, caractérisé en ce que le dispositif de débrayage comprend un levier (6) pivotant, précontraint par un ressort, dans la zone d'extrémité duquel est conformé l'élément de blocage (5).

5. Dispositif selon la revendication 1, caractérisé en ce que l'arbre de dosage (4) est supporté sur le carter (3) en étant capable de translation longitudinale.

6. Dispositif selon la revendication 5, caractérisé en ce que l'arbre de dosage (4) est pourvu d'au moins une butée (8) pour actionner un levier (7) (Figure 9).

7. Dispositif selon la revendication 6, caractérisé en ce que, par déplacement de l'arbre de dosage (4), la butée (8) peut, contre la force du ressort de précontrainte, venir en appui contre le levier (7), afin de faire pivoter celui-ci en prise permettant le blocage.

8. Dispositif selon la revendication 7, caractérisé en ce que, par déplacement de l'arbre de dosage (4), la butée (8) peut, contre la force du ressort de précontrainte, venir en appui contre le levier (7) afin de faire pivoter celui-ci en prise permettant le déblocage.

9. Dispositif selon la revendication 5, caractérisé en ce qu'un arbre auxiliaire (9), relié à l'arbre de dosage (4), est monté dans le carter, parallèlement audit arbre de dosage (4), ledit arbre auxiliaire étant en prise avec le levier (7).

10. Dispositif selon la revendication 9, caractérisé en ce que, pour faire pivoter ledit levier (7), l'arbre auxiliaire (9) est pourvu d'un cône (10) pouvant être amené contre le levier (7).

11. Dispositif selon la revendication 9, caractérisé en ce que l'arbre auxiliaire (9) est capable de pivoter grâce à un mécanisme de pivotement, lorsque l'arbre de dosage (4) se déplace, et en ce que le levier (7) peut être actionné par l'intermédiaire de l'arbre auxiliaire (9).

12. Dispositif selon la revendication 11, caractérisé en ce que le levier (7) est supporté en rotation sur l'arbre auxiliaire (9).

13. Dispositif selon l'une quelconque des revendications 11 ou 12, caractérisé en ce que le mécanisme de rotation comprend un cône (11) formé sur l'arbre de dosage (4) et un levier (12) fixé sur l'arbre auxiliaire (9) (Figures 5 et 6).

14. Dispositif selon la revendication 11, caractérisé en ce que le mécanisme de rotation comporte une butée (13) formée sur l'arbre de dosage (4) et un levier pivotant (14) pouvant être amené contre la butée (13), ledit levier pivotant (14) étant relié à l'arbre auxiliaire (9) par l'intermédiaire d'un engrenage (15) (Figure 7).

15. Dispositif selon l'une quelconque des revendications 9 à 14, caractérisé en ce que deux leviers sont montés sur le carter (3), lesdits leviers pouvant chacun être amenés en prise avec l'une des roues de dosage (1, 2) et pouvant être précontraints l'un contre l'autre, au moyen d'une premier ressort et en ce que l'un des leviers est précontraint au moyen d'un deuxième ressort, contre l'effet du premier ressort.

16. Dispositif selon l'une quelconque des revendications 1 à 15, caractérisé en ce que l'arbre de dosage (4) et/ou le carter (3) sont pourvus d'une sécurité amovible, destinée à bloquer la position de l'arbre de dosage (4).
